# EUROPEAN PATENT APPLICATION

(11) **EP 4 553 735 A1**
(43) Date of publication of application: **14.05.2025**
(21) Application number: 23208407.9
(22) Date of filing: 07.11.2023
(51) Int. Cl.: G06Q 20/10, G06Q 20/18, G06Q 20/32, G07F 19/00, A45C 1/12

(54) **DEVICE FOR DEPOSITING CASH AND CASHLESS MONEY**

(71) Applicant: Khodjiev, Hayot, 12347 Berlin (DE); Ajun, Hulisi, 13088 Berlin (DE)
(72) Inventor: Khodjiev, Hayot, 12347 Berlin (DE); Ajun, Hulisi, 13088 Berlin (DE)

(57) **Abstract**

The present invention relates to a money depository device (1) for depositing cash as well as non-cash money on a bank account comprising a notification unit (10), a card reader (20) for accepting payments from a credit card or a debit card, an electronic communication interface (30), an input unit (40) for entering the payment amount of the accepted payment; a processing unit (50) in communication with the notification unit (10), the card reader unit (20), the electronic communication interface (30), and the input unit (40), a closed cash receptacle (60) having a cash deposit opening (61) and a cash withdrawal opening (62), wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1), wherein the electronic communication interface (30) is in further communication with an electronic mobile device (200).

## Description

### Field of the invention

The present invention relates to a money depository device (1) for depositing cash as well as non-cash money on a bank account comprising a notification unit (10), a card reader (20) for accepting payments from a credit card or a debit card, an electronic communication interface (30), an input unit (40) for entering the payment amount of the accepted payment; a processing unit (50) in communication with the notification unit (10), the card reader unit (20), the electronic communication interface (30), and the input unit (40), a closed cash receptacle (60) having a cash deposit opening (61) and a cash withdrawal opening (62), wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1), wherein the electronic communication interface (30) is in further communication with an electronic mobile device (200).

### Background of the invention

Many banks expend large sums in advertizing and campaigns to get customers of around ages 5-16 to turn them into long-term loyal customers. Many children may have piggy banks at home in which they deposit and save their pocket money as cash. Handling pocket money in physical form helps the children learning how to manage money. If a child would like to have something, for example a toy, then he or she should save up for it until this savings goal is reached. The child can then buy the item with the money saved. Depositing cash in a piggy bank gives the children a positive feedback instantly, by the visual perception that money has been inserted as well as the clinking sound of the coin hitting the other coins in the piggy bank, thereby facilitating saving money in its physical form. In contrast, depositing money into a bank account lacks a similar positive feedback of a piggy bank, as money on an invisible account may be too abstract for a children to appreciate The children would less likely go to a bank to make deposits on a bank account.

As the society moves forward to a "cashless society", payments and money transfers via debit or credit cards or electronically by mobile phones are becoming more and more common. Since traditional piggy banks only allow saving cash, there is a need for a cashless piggy bank which allows children to save money and makes it easier for parents to give pocket money, while providing the same positive feedback as a traditional piggy bank when the child puts a coin in it.

PCT application WO 2014/202970 A2 A discloses a computerised banking system comprising a bank computer maintaining a user bank account associated with the user and capable of being used for deposits and withdrawals, and a money box for storing accept cash from a user, with a control unit; a cash counter to count inserted cash; an electronic communications circuit in bidirectional communications with the bank computer which holds a user bank account; and an output device outputting information to the user, said information including both the amount of cash stored in said money box and the balance of said account in the possession of the user and in bidirectional communication with the bank computer.

German patent application DE102020105598A1 discloses a piggy bank device for paying in and out, checking and managing a cash receptacle and/or a money account, which comprises amoney detection device for detecting the incoming and / or outgoing coins in the cash receptacle. For this purpose, the cash receptacle has a processor-controlled digital control device with a digital memory. The cash receptacle communicates with an external digital and processor-controlled mobile device for data exchange.

Thus, it is the objective of the present invention to provide a money box that teaches children how to manage money - cash and a cashless bank account - and makes it easier for parents to pay cashless pocket money.

The objective of the present invention is solved by the teaching of the independent claims. Further advantageous features, aspects and details of the invention are evident from the dependent claims, the description, the figures, and the examples of the present application.

### Description of the invention

The present invention is directed to a money depository device (1) comprising
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), and
wherein the input unit (40) comprises 2 to 8 printed buttons (42) for setting the payment amount to different fixed amounts, wherein the 2 to 8 printed buttons (42) are located adjacent to the card reader (20).

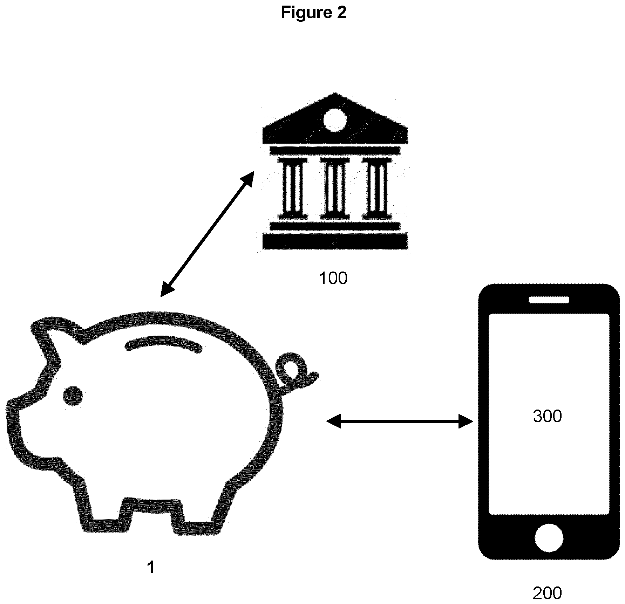

The money depository device (1) according to the invention is an interactive money box device, which allows children to interact with their online bank account, as well as use the device to physically save and count coins and notes, as well as to recieve cashfree pocket money without the need of using a separate PC, application-based phone or tablet computer device (see Figure 2). To this extent, the inventive money depository device (1) comprises a direct communication between the electronic communication interface (30) and the computer of a remote bank (100) operating a user's bank account (150). The user's bank account (150) is associated with the money depository device (1) in such a way that card payments processed via the money depository device (1) are directly credited to the reals user's bank account (150) without a virtual dummy account.

The term "direct communication", as used herein, refers to a communication between the electronic communication interface (30) and a computer of a remote bank (100) without a local PC or an electronic mobile device (200), such as a tablet or a smartphone, in between.

In other words, the present invention is directed to a money depository device (1) comprising
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the card payment is processed via the direct communication between the money depository device (1) and the remote bank (100).

In other words, the present invention is directed to a money depository device (1) comprising
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the electronic mobile device (200) is not used to enter the payment amount.

Reworded, the present invention is directed to a money depository device (1) comprising
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the user's bank account (150) is not a dummy bank account.

The inventive money depository device (1) allows parents to spend pocket money to their children easily cashfree as well as in cash, as no further device, such as a smartphone or tablet is needed. For cashfree pocket money, a parent inserts a debit or credit card into the card reader (20) of the device or, in case of contactless payments, holds the card or a contactless payments-enabled smartphone onto the card reader, then enters the payment amount into the input unit (40) and waits until the notification unit (10) emits an acoustic and/or visual signal that the payment is complete. Thus, in contrast to the money boxes of the prior art, the inventive money depository device (1) comprises all components needed for local cashfree pocket money spending.

In order to provide an inexpensive money depository device to a broad range of users, the money depository device (1) does not comprise any components of high cost such as a money counting machine or money counting device.

For saving cash, the money depository device (1) comprises a closed cash receptacle (60) having a cash deposit opening (61) and a cash withdrawal opening (62). The cash deposit opening (61) is formed in size and shape to accept coins or bills easily and is preferably positioned on a top part of the money depository device (1). The cash withdrawal opening (62) may be designed to be opened with little effort or locked with a key.

Preferably, the money depository device (1) has the physical appearance of a piggy bank, toy or another appearance that may appeal to the account holder. For example, the shape of an animal may be preferred for a young child, such as a pig, rabbit, lion, dog, horse, etc. But also, a princess, unicorn, a spaceship, or a fortress may be appealing for a child. For older users, it may be preferred to include other shapes or designs, by way of non-limiting example, a sports team logo, a footbal, a trophy, a car, a plane, a boat, a robot, a doll, a musical instrument, etc. By providing a toy-like device that provides visual and/or audible notifications via the notification unit (10), the money depository device (1) may appear more like an actual toy and appeal to a child, which may make the child want to make more deposits or have more deposits made into their bank account in order to see or hear the notification, thus encouraging them to save. The money depository device (1) according to the invention may provide a similar positive feedback as a physical piggy bank into which the child would insert cash, thus encouraging them to create and/or utilize their bank account.

In order to confirm card payments, to inform the user about the balance of its bank account and to inform the user when a savings goal has been reached, the inventive money depository device (1) comprises a **notification unit** (10). The notification unit preferably provides an audible (acoustic) and/or visual notification, when a card payment to the user's bank account has been completed or when a savings target has been reached or when a withdrawal or deposit has been made from the user's bank account.

Visual notification of the notification unit can be created by a visual indicator. Examples of visual indicators include a display made up of an array of discrete LEDs, as well as one or more LEDs (light-emitting diode) that light up. Each LED may comprise one color or a variety of colors. Alternatively, the visual indicator may include moving parts that move, for example, spin, slide, etc. Preferably, a visual indicator may provide more than one visual indication, by way of non-limiting example, various colors of light, blinking versus steady light, varying movements or a combination thereof to differentiate activities or status of the bank account, status of savings targets achieved, or other reasons for notifications.

Preferably, the notification unit comprises a speaker (11) which gives off a sound. The type of sound is not limited and may include, but is not limited to, a chirp, a beep, a tune and a audio recording. Preferably, different sounds are emitted to notify of different activities or status of the fund account, for example, a gift, a payment, a status achieved, a savings target reached, etc. The sound may correlate to the shape of the device (1), for instance if the device is in the shape of an animal, the notification sound may preferably include the animal's sound.

In a preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the notification unit (10) comprises a speaker (11) and/or a display (12).

In a preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the notification unit (10) comprises a speaker (11).

In a preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the notification unit (10) comprises a speaker (11) and a display (12).

In a preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets, and
wherein the notification unit (10) is configured to output an acoustic and/or visual signal when a savings target set by the application running on the electronic mobile device (1) has been reached.

In a further preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the notification unit (10) comprises a speaker (11) and/or a display (12), which is configured to emit an signal when a withdrawal or deposit has been made from the user's bank account.

In a further preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets, and
wherein the notification unit (10) comprises a speaker (11) and/or a display (12), which is configured to emit an signal when a withdrawal or deposit has been made from the user's bank account.

In a further preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets,
wherein the notification unit (10) is configured to output an acoustic and/or visual signal when a savings target set by the application running on the electronic mobile device (1) has been reached, and
wherein the notification unit (10) comprises a speaker (11) and/or a display (12), which is configured to emit an signal when a withdrawal or deposit has been made from the user's bank account.

For accepting payments from a credit card or a debit card, the inventive device comprises a **card reader** (20). The card reader may identify card data in the following ways, among others: 1) a card having a magnetic stripe is swiped through a magnetic read head slot in the card reader 2) the card with near field communications (NFC) technology is held next to the card reader ("contactless payments"), and 3) the card having an EMV chip is put into an EMV slot of the card reader where the EMV chip card is inserted there into. The card reader is configured to identify the card data based on universal specifications and formats that apply to financial transaction cards. The card reader can be a micro-controller based device that can communicate with a magnetic read head to read the tracks on the magnetic stripe cards simultaneously, a Near Field read head (not shown) to read electromagnetic signals from a financial transaction card with Near Field Communication (NFC) capabilities, or an NFC-enabled device or a contactless reader.

Thus, in a preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the card reader (20) is configured to accept contactless payments.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the card reader (20) is configured to accept contactless payments, and
wherein the notification unit (10) comprises a speaker (11) and/or a display (12), which is configured to emit an signal when a withdrawal or deposit has been made from the user's bank account.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets,
wherein the notification unit (10) is configured to output an acoustic and/or visual signal when a savings target set by the application running on the electronic mobile device (1) has been reached, and
wherein the card reader (20) is configured to accept contactless payments.

To this extent, the card reader comprises an RFID (NFC) module (22), which is arranged to sense contactless credit or debit cards used with a bank account, and/or mobile phones arranged for contactless payment.

Thus, in a preferred embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the card reader (20) is configured to accept contactless payments and the card reader (20) comprises an EMV slot (21), in which a card having an EMV chip is put into.

The inventive money depository device (1) further comprises an **electronic communication interface** (30) for data transfer between the device and a bank computer of a remote bank (100) as well as data transfer between the device and an electronic mobile device (200). To this extent, the interface may comprise different components such as a USB port (35), a WiFi transceiver (31), a Bluetooth transceiver (32), and a cellular modem (33).

Since highly sensitive data is exchanged with the bank's server for payment data exchange, it must be ensured that data sent over the Internet cannot be read by others. To this extent, the direct communication between the electronic communication interface (30) and the remote bank (100) is preferably capsulated and/or encrypted. Therefore, another embodiment of the present invention is directed to a money depository device (1), comprising
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200);
wherein the input unit (40) comprises 2 to 8 printed buttons (42) for setting the payment amount to different fixed amounts, wherein the 2 to 8 printed buttons (42) are located adjacent to the card reader (20), and
wherein the direct communication between the electronic communication interface (30) and the remote bank (100) is a capsulated and encrypted communication established via a local WiFi network and/or a mobile network.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200);
wherein the input unit (40) comprises 2 to 8 printed buttons (42) for setting the payment amount to different fixed amounts, wherein the 2 to 8 printed buttons (42) are located adjacent to the card reader (20), and
wherein the direct communication between the electronic communication interface (30) and the remote bank (100) is a capsulated and encrypted communication established via a local WiFi network and/or a mobile network.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200);
wherein the input unit (40) comprises 2 to 8 printed buttons (42) for setting the payment amount to different fixed amounts, wherein the 2 to 8 printed buttons (42) are located adjacent to the card reader (20),
wherein the notification unit (10) comprises a speaker (11) and/or a display (12), which is configured to emit an signal when a withdrawal or deposit has been made from the user's bank account, and
wherein the direct communication between the electronic communication interface (30) and the remote bank (100) is a capsulated and encrypted communication established via a local WiFi network and/or a mobile network.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200);
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets,
wherein the notification unit (10) is configured to output an acoustic and/or visual signal when a savings target set by the application running on the electronic mobile device (1) has been reached, and
wherein the direct communication between the electronic communication interface (30) and the remote bank (100) is a capsulated and encrypted communication established via a local WiFi network and/or a mobile network.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200);
wherein the input unit (40) comprises 2 to 8 printed buttons (42) for setting the payment amount to different fixed amounts, wherein the 2 to 8 printed buttons (42) are located adjacent to the card reader (20),
wherein the card reader (20) is configured to accept contactless payments, and wherein the direct communication between the electronic communication interface (30) and the remote bank (100) is a capsulated and encrypted communication established via a local WiFi network and/or a mobile network.

In another embodiment, the the direct communication between the electronic communication interface (30) and the remote bank (100) is established via a Virtual Private Network communication, i.e. a VPN tunnel.

Similarly, the communication between electronic communication interface (30) and the electronic mobile device (200) contains sensitive data, which may be encrypted to prevent eavesdropping. Thus, in another embodiment of the present invention, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the input unit (40) comprises 2 to 8 printed buttons (42) for setting the payment amount to different fixed amounts, wherein the 2 to 8 printed buttons (42) are located adjacent to the card reader (20),
wherein the electronic communication interface (30) is in an encrypted communication with an electronic mobile device (200).

In another embodiment of the inventive money depository device (1), the electronic communication interface (30) is in a communication with an **electronic mobile device** (200) for data transfer. To this extent, a suitable application (300) is running on the electronic mobile device (200). The application (300) can be used to make settings on the money depository device (1). Another use is that a savings target, such as a toy, can be defined, submitted to the money depository device (1) as well as controlled.

Thus, in another embodiment of the present invention, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), wherein the communication between the electronic communication interface (30) and the electronic mobile device (200) is configured for data transfer between the money depository device (1) and an application (300) running on the electronic mobile device (200) for setting up and controlling the money depository device (1), and
wherein the input unit (40) comprises 2 to 8 printed buttons (42) for setting the payment amount to different fixed amounts, wherein the 2 to 8 printed buttons (42) are located adjacent to the card reader (20).

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), wherein the communication between the electronic communication interface (30) and the electronic mobile device (200) is configured for data transfer between the money depository device (1) and an application (300) running on the electronic mobile device (200) for setting up and controlling the money depository device (1),
wherein the notification unit (10) comprises a speaker (11) and/or a display (12), which is configured to emit an signal when a withdrawal or deposit has been made from the user's bank account, and
wherein the input unit (40) comprises 2 to 8 printed buttons (42) for setting the payment amount to different fixed amounts, wherein the 2 to 8 printed buttons (42) are located adjacent to the card reader (20).

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), wherein the communication between the electronic communication interface (30) and the electronic mobile device (200) is configured for data transfer between the money depository device (1) and an application (300) running on the electronic mobile device (200) for setting up and controlling the money depository device (1),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets,
wherein the notification unit (10) is configured to output an acoustic and/or visual signal when a savings target set by the application running on the electronic mobile device (1) has been reached, and
wherein the input unit (40) comprises 2 to 8 printed buttons (42) for setting the payment amount to different fixed amounts, wherein the 2 to 8 printed buttons (42) are located adjacent to the card reader (20).

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), wherein the communication between the electronic communication interface (30) and the electronic mobile device (200) is configured for data transfer between the money depository device (1) and an application (300) running on the electronic mobile device (200) for setting up and controlling the money depository device (1),
wherein the card reader (20) is configured to accept contactless payments, and wherein the input unit (40) comprises 2 to 8 printed buttons (42) for setting the payment amount to different fixed amounts, wherein the 2 to 8 printed buttons (42) are located adjacent to the card reader (20).

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), wherein the communication between the electronic communication interface (30) and the electronic mobile device (200) is configured for data transfer between the money depository device (1) and an application (300) running on the electronic mobile device (200) for setting up and controlling the money depository device (1),
wherein the direct communication between the electronic communication interface (30) and the remote bank (100) is a capsulated and encrypted communication established via a local WiFi network and/or a mobile network, and wherein the input unit (40) comprises 2 to 8 printed buttons (42) for setting the payment amount to different fixed amounts, wherein the 2 to 8 printed buttons (42) are located adjacent to the card reader (20).

The application (300) can also be used to manage the user's bank account (150) associated with the money depository device, including checking balance and transaction data. The electronic mobile device (200) is connected to the internet for data exchange either via a mobile network in the case of a smartphone or via a landline in the case of a computer. The data exchange takes place in encrypted form. The data that is transferred to the bank server of the bank (100) is transmitted, for example, via a secure VPN line / VPN tunnel (Virtual Private Network).

The application (300) can further be used to set custom notifications for payments with specific cards. For instance, a mother may enter some card information and a speak a voice message into the application (300). When a mother pays pocket money to his or her child using her card, the card will be identified on basis of the previously entered information (e.g. last 4 digits) and the notification unit of the money depository device will play the previously recorded voice message of the mother.

Preferably, the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets.

Thus, in another embodiment of the present invention, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets, and
wherein the input unit (40) comprises 2 to 8 printed buttons (42) for setting the payment amount to different fixed amounts, wherein the 2 to 8 printed buttons (42) are located adjacent to the card reader (20).

Preferably, the electronic mobile device (200) is a smartphone or a tablet. Thus, in another embodiment of the present invention, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the electronic mobile device (200) is a smartphone or a tablet.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the notification unit (10) comprises a speaker (11) and/or a display (12), which is configured to emit an signal when a withdrawal or deposit has been made from the user's bank account, and
wherein the electronic mobile device (200) is a smartphone or a tablet.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets,
wherein the notification unit (10) is configured to output an acoustic and/or visual signal when a savings target set by the application running on the electronic mobile device (1) has been reached, and
wherein the electronic mobile device (200) is a smartphone or a tablet.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the card reader (20) is configured to accept contactless payments, and
wherein the electronic mobile device (200) is a smartphone or a tablet.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the direct communication between the electronic communication interface (30) and the remote bank (100) is a capsulated and encrypted communication established via a local WiFi network and/or a mobile network, and
wherein the electronic mobile device (200) is a smartphone or a tablet.

In another embodiment, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application (300) running on the electronic mobile device (200) for setting up and controlling the money depository device (1), and wherein the electronic mobile device (200) is a smartphone or a tablet.

The electronic mobile device (200) may be connected to the money depository device (1) via Bluetooth, Bluetooth Low Energy, Near-field communication, local WiFi network and/or a USB-cable. Thus, in another embodiment of the present invention, the money depository device (1) comprises
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and
wherein the communication between the electronic communication interface (30) and the electronic mobile device (200) is established via Bluetooth, Bluetooth Low Energy, Near-field communication, local WiFi network and/or a USB-cable.

Preferably, the communication between the electronic communication interface (30) and the electronic mobile device (200) is established via Bluetooth, Bluetooth Low Energy, or a local WiFi network.

The inventive money depository device (1) further comprises an **input unit** (40) for entering the payment amount. The input unit may comprise any elements which are suitable for defining a payment amount and is not limited to buttons, knobs, touch elements, or sliders.

Since the input unit (40) should only be used when a card payment is initiated, it is preferred that the input elements are only active and/or visible during a card payment.

Thus, in another embodiment of the present invention, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts as input elements (48), wherein the 2 to 8 printed buttons (42) are located adjacent to the card reader (20), and
wherein the input elements (48) are only active and/or visible during a payment accepted by the card reader (20).

In a further embodiment, the input unit (40) comprises an illuminated touch keypad (41), which is configured to illuminate when a card payment is initiated by the card reader (20). Thus, in another embodiment of the present invention, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), and
wherein the input unit (40) comprises an illuminated touch keypad (41), which is configured to illuminate when a card payment is initiated by the card reader (20).

In a further embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the notification unit (10) comprises a speaker (11) and/or a display (12), which is configured to emit an signal when a withdrawal or deposit has been made from the user's bank account, and
wherein the input unit (40) comprises an illuminated touch keypad (41), which is configured to illuminate when a card payment is initiated by the card reader (20).

In a further embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets,
wherein the notification unit (10) is configured to output an acoustic and/or visual signal when a savings target set by the application running on the electronic mobile device (1) has been reached, and
wherein the input unit (40) comprises an illuminated touch keypad (41), which is configured to illuminate when a card payment is initiated by the card reader (20).

In a further embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the card reader (20) is configured to accept contactless payments, and wherein the input unit (40) comprises an illuminated touch keypad (41), which is configured to illuminate when a card payment is initiated by the card reader (20).

In a further embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the direct communication between the electronic communication interface (30) and the remote bank (100) is a capsulated and encrypted communication established via a local WiFi network and/or a mobile network, and
wherein the input unit (40) comprises an illuminated touch keypad (41), which is configured to illuminate when a card payment is initiated by the card reader (20).

In a further embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the communication between the electronic communication interface (30) and the electronic mobile device (200) is configured for data transfer between the money depository device (1) and an application (300) running on the electronic mobile device (200) for setting up and controlling the money depository device (1), and wherein the input unit (40) comprises an illuminated touch keypad (41), which is configured to illuminate when a card payment is initiated by the card reader (20).

In a further embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the electronic mobile device (200) is a smartphone or a tablet, and
wherein the input unit (40) comprises an illuminated touch keypad (41), which is configured to illuminate when a card payment is initiated by the card reader (20).

In another embodiment, the input elements (48) are designed as buttons. Buttons are haptically easier to use as touch elements and thus make it more comfortable - especially for elderly people -to set the payment amount. The buttons have a fixed payment amount printed on them for easily identifying and setting the desired payment amount.

Preferably, the input unit (40) comprises multiple buttons, each button configured for a different fixed payment amount. More preferably, the input unit (40) comprises at least two buttons, each button configured for a different fixed payment amount. More preferably, the input unit (40) comprises 2 to 8 printed buttons (42) for setting the payment amount to different fixed amounts. Thus, in another embodiment of the present invention, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), and wherein the input unit (40) comprises 2 to 8 printed buttons (42) for setting the payment amount to different fixed amounts.

Preferably, the input elements (48) are positioned adjacent to the card reader (20). Thus, in another embodiment of the present invention, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), and wherein the input unit (40) comprises 2 to 8 printed buttons (42) for setting the payment amount to different fixed amounts and wherein the 2 to 8 printed buttons (42) are located adjacent to the card reader (20).

In another embodiment, the input unit (40) further comprises a button (45) for setting the payment amount to the remaining amount of a savings target set by the application (300) running on the electronic mobile device (200).

Thus, in another embodiment of the present invention, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), and wherein the input unit (40) further comprises a button (45) for setting the payment amount to the remaining amount of a savings target set by the application (300) running on the electronic mobile device (200).

In another embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the notification unit (10) comprises a speaker (11) and/or a display (12), which is configured to emit an signal when a withdrawal or deposit has been made from the user's bank account, and
wherein the input unit (40) further comprises a button (45) for setting the payment amount to the remaining amount of a savings target set by the application (300) running on the electronic mobile device (200).

In another embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets,
wherein the notification unit (10) is configured to output an acoustic and/or visual signal when a savings target set by the application running on the electronic mobile device (1) has been reached, and
wherein the input unit (40) further comprises a button (45) for setting the payment amount to the remaining amount of a savings target set by the application (300) running on the electronic mobile device (200).

In another embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the card reader (20) is configured to accept contactless payments, and wherein the input unit (40) further comprises a button (45) for setting the payment amount to the remaining amount of a savings target set by the application (300) running on the electronic mobile device (200).

In another embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the direct communication between the electronic communication interface (30) and the remote bank (100) is a capsulated and encrypted communication established via a local WiFi network and/or a mobile network, and
wherein the input unit (40) further comprises a button (45) for setting the payment amount to the remaining amount of a savings target set by the application (300) running on the electronic mobile device (200).

In another embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the communication between the electronic communication interface (30) and the electronic mobile device (200) is configured for data transfer between the money depository device (1) and an application (300) running on the electronic mobile device (200) for setting up and controlling the money depository device (1), and wherein the input unit (40) further comprises a button (45) for setting the payment amount to the remaining amount of a savings target set by the application (300) running on the electronic mobile device (200).

In another embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the electronic mobile device (200) is a smartphone or a tablet, and
wherein the input unit (40) further comprises a button (45) for setting the payment amount to the remaining amount of a savings target set by the application (300) running on the electronic mobile device (200).

In another embodiment, the money depository device (1) comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20),
wherein the input unit (40) comprises an illuminated touch keypad (41), which is configured to illuminate when a card payment is initiated by the card reader (20), and wherein the input unit (40) further comprises a button (45) for setting the payment amount to the remaining amount of a savings target set by the application (300) running on the electronic mobile device (200).

In a particularly preferred embodiment of the money depository device (1), the payment amount and a savings target can be entered directly on the device, thereby facilitating giving pocket money as well as setting a savings target. To this extent, the notification unit of the inventive device comprises a display (12) showing the payment amount entered and a savings target entered, and the input unit (40) further comprises input elements (48), which allow entering a savings target.

Thus, in another aspect, the money depository device (1) according to the invention comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), wherein the notification unit of the inventive device comprises a display (12) showing the payment amount entered and a savings target entered, and wherein the input unit (40) further comprises input elements (48), which allow entering a savings target.

In other words, the money depository device (1) according to the invention comprises
- a notification unit (10);
- a card reader (20) for accepting payments from a credit card or a debit card;
- an electronic communication interface (30);
- an input unit (40) comprising input elements (48) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);

wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200),
wherein the input unit (40) comprises 2 to 8 printed buttons (42) for setting the payment amount to different fixed amounts, wherein the 2 to 8 printed buttons (42) are located adjacent to the card reader (20), wherein the notification unit of the inventive device comprises a display (12) showing the payment amount entered and a savings target entered, and wherein the input unit (40) is configured to enter a savings target.

The inventive money depository device (1) further comprises a **processing unit** (50) for controlling the electronic components, including the notification unit (10), the card reader unit (20), the electronic communication interface (30), and the input unit (40) with which the processing unit is in communication with. To this extent, the processing unit comprises a processor (51) and a memory (52) for storing data and software programs (53) with which the processor (51) operates. The software (53) may comprise a module for controlling the components of the system, i.e. notification unit (10), the card reader unit (20), the electronic communication interface (30), and the input unit (40), a module for establishing a communication with the remote bank (100), a module for establishing a communication with an electronic mobile device (200), a data encryption module, a module for processing payment amount entered via the input unit (40), a module for processing the bank account data obtained from the remote bank (100), a module for processing card payments, and a module for the notification unit (10). The processing unit (50) may comprise a conventional microcontroller, including RISC or ARM systems.

### Description of the Figures

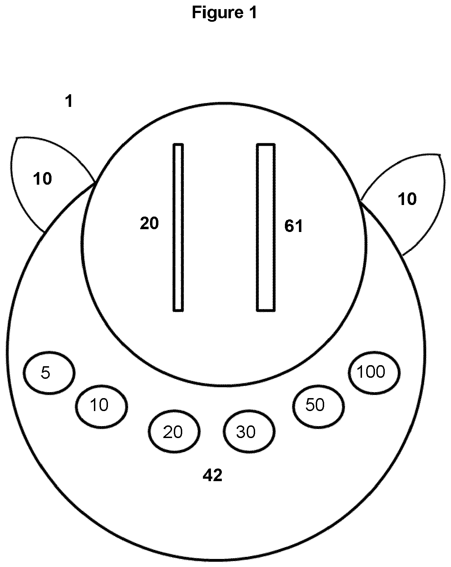

**Figure 1****:** shows the front view of an exemplarily embodiment of the inventive device (1) with buttons (42) as input elements for the payment amount. The device has the appearance of a pig, wherein the notification unit is designed as speaker in ear form, the card reader (20) and the cash deposit opening (61) designed as nose openings, and the input unit (40) is designed as buttons arranged as a smiling mouth below the nose.
**Figure 2****:** shows a diagram indicating the connections of the device (1) with the remote bank computer and the electronic mobile device.

The following examples are included to demonstrate preferred embodiments of the invention. It should be appreciated by those skilled in the art that the techniques disclosed in the examples, which follow represent techniques discovered by the inventor to function well in the practice of the invention, and thus can be considered to constitute preferred modes for its practice. However, those skilled in the art should, in light of the present disclosure, appreciate that many changes can be made in the specific embodiments, which are disclosed and still obtain a like or similar result without departing from the spirit and scope of the invention.

Further modifications and alternative embodiments of various aspects of the invention will be apparent to those skilled in the art in view of this description. Accordingly, this description is to be construed as illustrative only and is for the purpose of teaching those skilled in the art the general manner of carrying out the invention. It is to be understood that the forms of the invention shown and described herein are to be taken as examples of embodiments. Elements and materials may be substituted for those illustrated and described herein, parts and processes may be reversed, and certain features of the invention may be utilized independently, all as would be apparent to one skilled in the art after having the benefit of this description of the invention. Changes may be made in the elements described herein without departing from the spirit and scope of the invention as described in the following claims.

### Reference Signs

- 1: money depository device
- 10: notification unit
- 11: speaker
- 12: display
- 20: card reader
- 21: EMV slot
- 22: RFID module
- 30: electronic communication interface
- 31: WiFi transceiver
- 32: Bluetooth transceiver
- 33: cellular modem
- 35: USB port
- 40: input unit
- 41: illuminated touch keypad
- 42: 2 to 8 printed buttons
- 45: button for remaining payment amount
- 48: input elements
- 50: processing unit
- 51: processor
- 52: memory
- 53: software
- 60: closed cash receptacle
- 61: cash deposit opening
- 62: cash withdrawal opening
- 100: remote bank
- 150: user's bank account
- 200: electronic mobile device
- 300: application

## Claims

1. A money depository device (1) comprising
- a notification unit (10);
- a card reader (20) for accepting payments from a credit card or a debit card;
- an electronic communication interface (30);
- an input unit (40) for entering the payment amount of the accepted payment;
- a processing unit (50) in communication with the notification unit (10), the card reader unit (20), the electronic communication interface (30), and the input unit (40);
- a closed cash receptacle (60) having a cash deposit opening (61) and a cash withdrawal opening (62);
wherein the electronic communication interface (30) is in direct communication with a remote bank (100) operating a user's bank account (150) associated with the money depository device (1) and wherein said direct communication is configured for deposits on said user's bank account from a card payment accepted by the card reader (20) of the money depository device (1);
wherein the electronic communication interface (30) is in further communication with an electronic mobile device (200), and
wherein the input unit (40) comprises 2 to 8 printed buttons (42) for setting the payment amount to different fixed amounts, wherein the 2 to 8 printed buttons (42) are located adjacent to the card reader (20).

2. The money depository device (1) according to claim 1, wherein the communication between the electronic communication interface (30) and the electronic mobile device (200) is configured for data transfer between the money depository device (1) and an application running on the electronic mobile device (200) for checking the balance of the user's bank account associated with the money depository device (1), for checking transaction data, and for setting and tracking savings targets.

3. The money depository device (1) according to claim 2, wherein the notification unit (10) is configured to output an acoustic and/or visual signal when a savings target set by the application running on the electronic mobile device (1) has been reached.

4. The money depository device (1) according to any one of claims 1 to 3, wherein the notification unit (10) comprises a speaker (11) and/or a display (12), which is configured to emit an signal when a withdrawal or deposit has been made from the user's bank account.

5. The money depository device (1) according to any one of claims 1 to 4, wherein the input unit (40) comprises an illuminated touch keypad (41), which is configured to illuminate when a card payment is initiated by the card reader (20).

6. The money depository device (1) according to any one of claims 1 to 5, wherein the direct communication between the electronic communication interface (30) and the remote bank (100) is a capsulated and encrypted communication established via a local WiFi network and/or a mobile network.

7. The money depository device (1) according to any one of claims 1 to 6, wherein the card reader (20) is configured to accept contactless payments.

8. The money depository device (1) according to any one of claims 1 to 7, wherein the electronic mobile device (200) is a smartphone or a tablet.

9. The money depository device (1) according to any one of claims 1 to 8, wherein the communication between the electronic communication interface (30) and the electronic mobile device (200) is established via Bluetooth, Bluetooth Low Energy, Near-field communication, local WiFi network and/or a USB-cable.

10. The money depository device (1) according to any one of claims 1 to 9, wherein the communication between the electronic communication interface (30) and the electronic mobile device (200) is configured for data transfer between the money depository device (1) and an application (300) running on the electronic mobile device (200) for setting up and controlling the money depository device (1).

11. The money depository device (1) according to any one of claims 1 to 10, wherein the notification unit comprises a display (12) showing the payment amount entered and a savings target entered, and wherein the input unit (40) is configured to enter a savings target.

12. The money depository device (1) according to any one of claims 2 to 11, wherein the input unit (40) further comprises a button (45) for setting the payment amount to the remaining amount of a savings target set by the application (300) running on the electronic mobile device (200).
